(19) Europäisches Patentamt
European Patent Office
Office européen des brevets

(11) **EP 2 023 291 A2**

(12) **DEMANDE DE BREVET EUROPEEN**

(43) Date de publication:
**11.02.2009 Bulletin 2009/07**

(51) Int Cl.:
**G06T 7/20** [(2006.01)]

(21) Numéro de dépôt: **08160433.2**

(22) Date de dépôt: **15.07.2008**

(84) Etats contractants désignés:
**AT BE BG CH CY CZ DE DK EE ES FI FR GB GR HR HU IE IS IT LI LT LU LV MC MT NL NO PL PT RO SE SI SK TR**
Etats d'extension désignés:
**AL BA MK RS**

(30) Priorité: **16.07.2007 FR 0756517**

(71) Demandeur: **Commissariat à l'Energie Atomique 75015 Paris (FR)**

(72) Inventeur: **Verdant, Arnaud 38110 La Tour du Pin (FR)**

(74) Mandataire: **Ilgart, Jean-Christophe BREVALEX 3, rue du Docteur Lancereaux 75008 Paris (FR)**

(54) **Procédé et dispositif de détection de mouvement à algorithme de seuillage par enveloppe**

(57) Procédé de détection de mouvement comportant au moins les étapes suivantes :
- calcul d'une première moyenne $M1_n$ d'un signal $S_n$ destiné à être délivré par au moins un pixel d'une matrice de pixels (202) et correspondant à une n-ième image capturée, en fonction de $S_n$ et/ou de $M1_{n-1}$ ;
- calcul d'un signal $\Delta_n = |M1_n - S_n|$ ;
- calcul d'une seconde moyenne $M2_n$ de $\Delta_n$ en fonction de $M2_{n-1}$ et/ou de $\Delta_n$ ;
- calcul d'une troisième moyenne $M3_n$ du signal $(S_n - k_1.M2_n)$ en fonction de $M3_{n-1}$ et/ou de $(S_n - k_1.M2_n)$ ;
- calcul d'une quatrième moyenne $M4_n$ du signal $(S_n + k_2.M2_n)$ en fonction de $M4_{n-1}$ et/ou de $(S_n + k_2.M2_n)$ ;
un mouvement étant considéré comme détecté à partir du résultat d'au moins une comparaison réalisée à partir des signaux $S_n$, $(M3_n - M2_n)$ et $(M4_n + M2_n)$ ;
avec n : nombre entier naturel.

FIG. 2

**Description**

**DOMAINE TECHNIQUE**

L'invention concerne le domaine de la détection de mouvement et plus particulièrement celui des capteurs d'images, tels que des imageurs CMOS utilisés dans le domaine du visible ou de l'infrarouge, dans lesquels un procédé de détection de mouvement est mis en oeuvre.

**ÉTAT DE LA TECHNIQUE ANTÉRIEURE**

Réaliser une détection de mouvement consiste à détecter le déplacement d'éléments mobiles par rapport à des éléments fixes dans un champ d'images capturées. Ces éléments peuvent être par exemple des véhicules ou encore des personnes. Une telle détection de mouvement consiste à isoler, parmi les signaux délivrés par un capteur d'images, ceux relatifs aux éléments mobiles, par exemple en détectant des variations significatives sur la moyenne ou la variance d'un signal d'un pixel ou d'un groupe de pixels indiquant un changement de la nature de l'élément capturé au niveau de ce pixel ou de ce groupe de pixels, par rapport à ceux relatifs aux éléments fixes dont la moyenne ou la variance reste par exemple sensiblement constante dans le temps. Pour cela, des procédés ou algorithmes de détection sont utilisés.

Une première approche consiste à utiliser un algorithme « à moyenne récursive » pour réaliser une telle détection de mouvement. Cet algorithme est basé sur un calcul d'estimation du fond, c'est-à-dire des éléments fixes se trouvant sur toutes les images capturées. Soit $X_n$ le fond, ou la moyenne, correspondant à une image n, $S_n$ le signal correspondant à l'image n acquise et 1/N un coefficient de pondération, on a alors :

$$X_n = X_{n-1} - \frac{1}{N} X_{n-1} + \frac{1}{N} S_n$$

On réalise ensuite une comparaison entre une valeur seuil $T_h$ choisie et $|S_n - X_n|$. Si la valeur obtenue est positive, cela signifie qu'un mouvement a été détecté. $X_n$ et $S_n$ peuvent être des variables obtenues à partir d'un signal délivré par un pixel ou en considérant plusieurs signaux délivrés par plusieurs pixels, par exemple un groupe de pixels disposés les uns à côté des autres et formant un macropixel, comme un seul signal, en prenant par exemple la moyenne de ces signaux.

Un tel algorithme a notamment pour inconvénient un manque de robustesse au niveau de la détection car le seuil de détection $T_h$ est déterminé à priori, avant la mise en oeuvre de l'algorithme, et est global à l'ensemble des pixels de la matrice. Cet inconvénient se traduit par une faible précision de la localisation des mouvements sur les images capturées. Le filtrage de type passe-bas réalisé par cet algorithme induit un déphasage, et donc un retard de la réponse par rapport au signal. Ce retard se traduit par un effet de «traînée» lorsque l'on représente les éléments mobiles détectés, c'est-à-dire que des signaux délivrés par des pixels ne capturant plus une partie d'un élément mobile sont encore considérés comme des signaux représentant une partie de l'élément mobile.

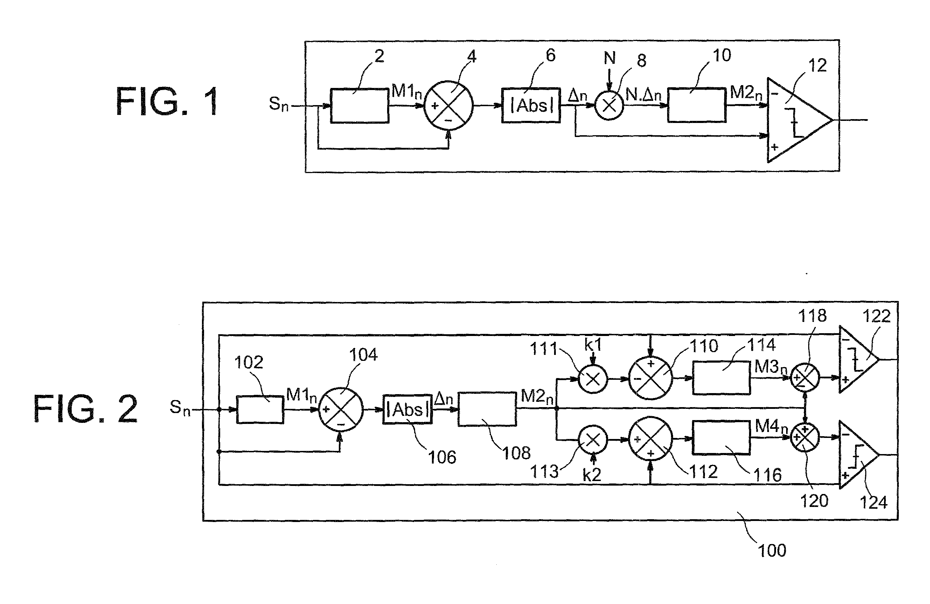

Une seconde approche consiste à utiliser un algorithme appelé sigma-delta pour réaliser une détection de mouvement. Cet algorithme permet la détection de variations significatives du signal par le biais du calcul de deux variables assimilables à la valeur moyenne et la variance du signal. La figure 1 est une représentation schématique d'un dispositif de détection de mouvement mettant en oeuvre un algorithme sigma-delta.

On calcule tout d'abord la moyenne sigma-delta $M1_n$ avec une valeur d'incrémentation et de décrémentation constante, par exemple 1, du signal $S_n$ correspondant à l'image n acquise. Pour cela, le signal $S_n$ est envoyé en entrée de premiers moyens de calcul de moyenne sigma-delta 2. Ces moyens 2 réalisent tout d'abord l'initialisation $M1_0 = S_0$. Pour les images suivantes, c'est-à-dire pour n > 0, ces moyens 2 comparent $M1_{n-1}$ et $S_n$. Si $M1_{n-1} < S_n$, on incrémente alors la valeur de $M1_{n-1}$ tel que $M1_n = M1_{n-1} + 1$. Si $M1_{n-1} > S_n$, on décrémente alors la valeur de $M1_{n-1}$ tel que $M1_n = M1_{n-1} - 1$. On calcule alors la valeur du signal $\Delta_n = |M1_n - S_n|$ par un soustracteur 4 et des moyens de calcul de valeur absolue 6. On réalise ensuite le calcul de $N \times \Delta_n$ par le multiplicateur 8, N étant une constante correspondant au seuil adaptatif de l'algorithme dont la valeur est choisie en fonction de la complexité de la scène. On réalise ensuite le calcul d'une moyenne sigma-delta $M2_n$ de $N.\Delta_n$ qui est envoyé en entrée de seconds moyens de calcul de moyenne sigma-delta 10. On réalise donc tout d'abord l'initialisation $M2_0 = 0$. Pour les images suivantes, c'est-à-dire pour n > 0, on compare $M2_{n-1}$ et $N.\Delta_n$. Si $M2_{n-1} < N.\Delta_n$, on incrémente alors la valeur de $M2_{n-1}$ tel que $M2_n = M2_{n-1} + 1$. Si $M2_{n-1} > N.\Delta_n$, on décrémente alors la valeur de $M2_{n-1}$ tel que $M2_n = M2_{n-1} - 1$. On réalise enfin une comparaison par un comparateur 12 entre le signal $\Delta_n$ et $M2_n$. Si $M2_n < \Delta_n$, cela signifie qu'un mouvement a été détecté.

Comme pour l'algorithme à moyenne récursive, les variables $S_n$, $M1_n$, $\Delta_n$ et $M2_n$ peuvent être obtenues à partir d'un signal délivré par un pixel ou en considérant plusieurs signaux délivrés par plusieurs pixels, par exemple un groupe de pixels disposés les uns à côté des autres, comme un seul signal, en prenant par exemple la moyenne de ces signaux.

Toutefois, un tel algorithme a notamment pour inconvénient de ne pas filtrer les mouvements parasites hautes fréquences qui sont alors considérés comme des mouvements à détecter (par exemple, un mouvement de feuilles d'arbre ou de la neige qui tombe). De plus, la constante N utilisée doit être déterminée à priori, ce qui réduit l'adaptabilité de la détection réalisée par cet algorithme.

**EXPOSÉ DE L'INVENTION**

Un but de la présente invention est donc de proposer un procédé de détection de mouvement permettant de réduire ou supprimer la détection des mouvements parasites hautes fréquences, offrant une détection plus efficace, par exemple en terme de précision de localisation des mouvements et supprimant l'effet de « traînée » obtenu par les procédés de l'art antérieur.

Un autre but de la présente invention est également de proposer un procédé de détection de mouvement nécessitant peu de ressources matérielles de calcul et de mémoire pour être mis en oeuvre, et pouvant être implanté de manière analogique dans un imageur très basse consommation (ayant par exemple une consommation moyenne égale à environ quelques centaines de $\mu W$).

Pour cela, la présente invention propose un procédé de détection de mouvement comportant au moins les étapes suivantes :

- calcul d'une première moyenne $M1_n$ d'un signal $S_n$ destiné à être délivré par au moins un pixel d'une matrice de pixels et correspondant à une n-ième image capturée, en fonction de la valeur du signal $S_n$ et/ou d'une valeur précédente $M1_{n-1}$ ;
- calcul d'un signal $\Delta_n = |M1_n - S_n|$ ;
- calcul d'une seconde moyenne $M2_n$ du signal $\Delta_n$ en fonction d'une valeur précédente $M2_{n-1}$ et/ou de la valeur du signal $\Delta_n$;
- calcul d'une troisième moyenne $M3_n$ du signal $(S_n - k_1.M2_n)$ en fonction d'une valeur précédente $M3_{n-1}$ et/ou de la valeur du signal $(S_n - k_1.M2_n)$ ;
- calcul d'une quatrième moyenne $M4_n$ du signal $(S_n + k_2.M2_n)$ en fonction d'une valeur précédente $M4_{n-1}$ et/ou de la valeur du signal $(S_n + k_2.M2_n)$ ;

un mouvement étant considéré comme détecté à partir du résultat d'au moins une comparaison réalisée à partir des signaux $S_n$, $(M3_n - M2_n)$ et $(M4_n + M2_n)$ ;

avec n : nombre entier naturel ;

et $k_1$ et $k_2$ : nombres réels positifs non nuls.

Ainsi, il est possible de réaliser une détection de variations significatives du signal émis par un pixel ou un macropixel en « seuillant » les variations du signal par l'enveloppe du signal $S_n$ lui-même, c'est-à-dire en définissant des valeurs seuils haute et basse adaptatives pour la détection de mouvement qui dépendent de l'activité du signal $S_n$ capturé. De plus, ce seuillage permet de conserver le signe de la dérivée du signal émis, contrairement à un seuillage effectué sur la valeur absolue de la différence entre le signal émis et une estimation du fond.

On améliore également l'adaptabilité de la détection en supprimant certaines constantes devant être déterminée à priori dans les procédés de l'art antérieur. On adapte également localement la sensibilité de la détection à l'activité des pixels, et cela de manière locale, c'est-à-dire individuellement pour chaque pixel.

Les coefficients $k_1$ et $k_2$ permettent également d'adapter directement les valeurs seuils haute et basse en fonction du niveau de perturbations dans les images analysées. Ces coefficients permettent de dilater ou de réduire l'enveloppe formée par les seuils de détection autour du signal $S_n$. Il est par exemple possible d'imposer des conditions de détection de seuil plus dures en dilatant cette enveloppe de détection, permettant ainsi de s'affranchir de certaines perturbations parasites lors de la détection de mouvements. Les valeurs de $k_1$ et de $k_2$ peuvent être choisies en fonction du milieu dans lequel est réalisée la détection de mouvements, c'est-à-dire en fonction de « l'agitation » ambiante dans les images analysées.

Dans un milieu urbain, les valeurs de $k_1$ et $k_2$ peuvent être égales à 1. De préférence, les valeurs de $k_1$ et/ou de $k_2$ peuvent être comprises entre 0 et 3. De plus, les valeurs de $k_1$ et de $k_2$ peuvent être similaires ou non, selon que l'on souhaite avoir une enveloppe symétrique ou asymétrique, en fonction des perturbations à ne pas détecter en tant que mouvements.

La première moyenne $M1_n$ peut être obtenue à partir de l'équation suivante :

$$M1_n = M1_{n-1} - \frac{1}{N_1} M1_{n-1} + \frac{1}{N_1} S_n \, ,$$

avec $M1_{-1} = 0$, et

$1/N_1$ : nombre réel positif non nul.

En choisissant une valeur appropriée de $1/N_1$, on peut choisir la constante de temps du calcul de cette première moyenne, qui peut être lente pour réaliser une estimation du fond des images capturées.
Dans une variante, la première moyenne $M1_n$ peut être obtenue au moins par les étapes de calcul suivantes :

- $M1_0 = S_0$ ;
  et pour $n > 0$ :
- $M1_n = M1_{n-1} + c_1$ lorsque $M1_{n-1} < S_n$ ;
- $M1_n = M1_{n-1} - c_1$ lorsque $M1_{n-1} > S_n$ ;
  avec $c_1$ : nombre réel positif non nul.

La seconde moyenne $M2_n$ peut être obtenue à partir de l'équation suivante :

$$M2_n = M2_{n-1} - \frac{1}{N_2} M2_{n-1} + \frac{1}{N_2} \Delta_n \, ,$$

avec $M2_{-1} = 0$, et

$1/N_2$ : nombre réel positif non nul.

La seconde moyenne $M2_n$ peut également être obtenue au moins par les étapes de calcul suivantes :

- $M2_0 = \Delta_0$ ;
  et pour $n > 0$ :
- $M2_n = M2_{n-1} + c_2$ lorsque $M2_{n-1} < \Delta_n$ ;
- $M2_n = M2_{n-1} - c_2$ lorsque $M2_{n-1} > \Delta_n$ ;
  avec $c_2$ : nombre réel positif non nul.

La troisième moyenne $M3_n$ peut être obtenue à partir de l'équation suivante :

$$M3_n = M3_{n-1} - \frac{1}{N_3} M3_{n-1} + \frac{1}{N_3} (S_n - k_1.M2_n) \, ,$$

avec $M3_{-1} = 0$, et

$1/N_3$ : nombre réel positif non nul.

Dans ce cas, la valeur de $1/N_3$ peut être ajustée en fonction de la valeur $|M3_n - S_n|$.
La troisième moyenne $M3_n$ peut être obtenue au moins par les étapes de calcul suivantes :

- $M3_0 = (S_0 - k_1.M2_0)$ ;
  et pour $n > 0$ :
- $M3_n = M3_{n-1} + c_3$ lorsque $M3_{n-1} < (S_n - k_1.M2_n)$ ;
- $M3_n = M3_{n-1} - c_3$ lorsque $M3_{n-1} > (S_n - k_1.M2_n)$ ;
  avec $c_3$ : nombre réel positif non nul.

La quatrième moyenne $M4_n$ peut être obtenue à partir de l'équation suivante :

$$M4_n = M4_{n-1} - \frac{1}{N_4} M4_{n-1} + \frac{1}{N_4}(S_n + k_2.M2_n) \, ,$$

avec $M4_{-1} = 0$, et

$1/N_4$ : nombre réel positif non nul.

Dans ce cas, la valeur de $1/N_4$ peut être ajustée en fonction de la valeur $|M4_n - S_n|$.

Une dissymétrie de l'enveloppe de seuillage peut être introduite par le choix des valeurs des constantes de temps $1/N_3$ et $1/N_4$ qui peuvent être adaptées dynamiquement au cours du procédé.

Par exemple, lorsque $M4_n < S_n$, on peut choisir $N_4$ petit, correspondant à une constante de temps $\tau$ courte, par exemple inférieure à 0,5 s (par exemple égale à 380 ms). Lorsque $M4_n > S_n$, on peut dans ce cas choisir $N_4$ grand, correspondant à une constante de temps $\tau$ longue, par exemple supérieure à 1 s (par exemple égale à 1,18 seconde. La constante de temps $\tau$ d'une moyenne peut être égale au rapport : période d'échantillonnage de la capture d'images/ln $(1 - 1/N)^{-1}$ la période d'échantillonnage correspondant à la période du signal $S_n$ (notée période $(S_n)$). Ainsi, lorsque $M4_n < S_n$, la valeur de $1/N_4$ peut vérifier la relation :

période$(S_n)$/ln$(1 - 1/N_4)^{-1} < 0,5$ s ;
et lorsque $M4_n > S_n$, la valeur de $1/N_4$ peut vérifier la relation :
période$(S_n)$/ln$(1 - 1/N_4)^{-1} > 1$ s.

De plus, lorsque $M3_n < S_n$, on peut choisir $N_3$ grand, correspondant à une constante de temps $\tau$ longue, par exemple supérieure à 1 s, et lorsque $M3_n > S_n$, on peut choisir $N_3$ petit, correspondant à une constante de temps $\tau$ courte, par exemple inférieure à 0,5 s. Ainsi, lorsque $M3_n < S_n$, la valeur de $1/N_3$ peut vérifier la relation :

période$(S_n)$/ln$(1 - 1/N_3)^{-1} > 1$ s ;
et lorsque $M3_n > S_n$, la valeur de $1/N_3$ peut vérifier la relation :
période$(S_n)$/ln$(1 - 1/N_3)^{-1} < 0,5$ s.

De manière générale, une constante de temps courte peut être égale à environ 380 ms, et une constante de temps longue peut être égale à environ 1,18 s. Les constantes de temps sont ici exprimées à une vitesse d'échantillonnage de 25 Hz.

Ainsi, une enveloppe de seuillage non symétrique permet d'adapter le seuillage des variations positives du signal (comparaison de $S_n$ et $M4_n$) et le seuillage des variations négatives du signal (comparaison de $S_n$ et $M3_n$). Il est par exemple possible de réaliser le filtrage de l'éblouissement de la caméra dû à des flashs répétés en durcissant les conditions de seuillage sur les variations (par exemple positives dans le cas d'une scène en niveau de gris et des flashs de couleur blanche correspondant à une valeur maximale du signal délivré) induites par ces flashs et de maintenir une sensibilité convenable sur les variations négatives induites par les autres objets plus sombres.

La quatrième moyenne $M4_n$ peut être obtenue au moins par les étapes de calcul suivantes :

- $M4_0 = (S_0 + k_2.M2_0)$ ;
  et pour $n > 0$ :
- $M4_n = M4_{n-1} + c_4$ lorsque $M4_{n-1} < (S_n + k_2.M2_n)$ ;
- $M4_n = M4_{n-1} - c_4$ lorsque $M4_{n-1} > (S_n + k_2.M2_n)$ ;
  avec $c_4$ : nombre réel positif non nul.

La valeur de la première moyenne $M1_n$ et/ou de la seconde moyenne $M2_n$ et/ou de la troisième moyenne $M3_n$ et/ou de la quatrième moyenne $M4_n$ peuvent être respectivement supérieures à une première valeur seuil minimum non nulle $S_{M1n}$ et/ou une seconde valeur seuil minimum non nulle $S_{M2n}$ et/ou une troisième valeur seuil minimum non nulle $S_{M3n}$ et/ou une quatrième valeur seuil minimum non nulle $S_{M4n}$.

Ces valeurs seuil peuvent être comprises entre environ $1/250 \times$ la dynamique du signal $S_n$ et $1/25 \times$ la dynamique du signal $S_n$, et par exemple égales à environ $1/50 \times$ la dynamique du signal $S_n$, la dynamique du signal $S_n$ correspondant à la valeur possible maximum de $|S_n|$ (par exemple égale à 256 pour un signal codé sur 8 bits).

La comparaison peut être réalisée entre les signaux $S_n$ et $(M3_n - M2_n)$ et entre les signaux $S_n$ et $(M4_n + M2_n)$, un mouvement étant considéré comme détecté lorsque $S_n > (M4_n + M2_n)$ ou $S_n < (M3_n - M2_n)$.

Dans une variante, le procédé peut comporter en outre, entre l'étape de calcul de la quatrième moyenne $M4_n$ du signal $(S_n + k_2.M2_n)$ et l'étape de comparaison, une étape de calcul d'une cinquième moyenne $M5_n$ du signal $S_n$ en fonction d'une valeur précédente $M5_{n-1}$ et/ou de la valeur du signal $S_n$, ladite comparaison pouvant être réalisée entre les signaux $M5_n$ et $(M3_n - M2_n)$ et entre les signaux $M5_n$ et $(M4_n + M2_n)$, un mouvement étant considéré comme détecté lorsque $M5_n > (M4_n + M2_n)$ ou $M5_n < (M3_n - M2_n)$.

Dans ce cas, on peut générer un filtrage passe bande éliminant les mouvements parasites hautes fréquences, ainsi que l'effet de « traînée » observé avec les procédés de détection de mouvement de l'art antérieur.

La cinquième moyenne $M5_n$ peut être obtenue à partir de l'équation suivante :

$$M5_n = M5_{n-1} - \frac{1}{N_5}M5_{n-1} + \frac{1}{N_5}S_n \ ,$$

avec $M5_{-1} = 0$, et

$1/N_5$ : nombre réel positif non nul.

Dans ce cas, on filtre alors encore plus efficacement les parasites hautes fréquences du signal.

Les valeurs des coefficients de pondérations $1/N$, ainsi que les valeurs des coefficients d'incrémentation et de décrémentation c dans le cas de calcul de moyenne de type sigma-delta, peuvent être calculées en fonction de la vitesse d'acquisition des images, et peuvent être aisément déterminées.

Les valeurs des coefficients de pondérations $1/N$ pouvant être utilisés dans le calcul des moyennes $M1_n$ et/ou $M2_n$ peuvent être choisies telles que la ou les constantes de temps $\tau$ de ces moyennes soient longues, par exemple supérieures à environ 1 seconde.

Les valeurs des coefficients d'incrémentation / décrémentation c pouvant être utilisés dans le calcul des moyennes $M1_n$ et/ou $M2_n$ et/ou $M3_n$ et/ou $M4_n$ peuvent être choisies et adaptées au cours du procédé afin de satisfaire la condition $c < |dS_n/d_n|$. Lorsque les coefficients d'incrémentation / décrémentation ont une valeur fixe, par exemple égale à 1, il est possible d'adapter une période de rafraichissement Tn du procédé, c'est-à-dire la période à laquelle sont réalisées les étapes du procédé, afin que la condition $c < |\Delta S_n/Tn|$ soit remplie.

La présente invention concerne également un dispositif de détection de mouvement comportant au moins :

- des moyens de calcul d'une première moyenne $M1_n$ d'un signal $S_n$ destiné à être délivré par au moins un pixel d'une matrice de pixels et correspondant à une n-ième image capturée, en fonction de la valeur du signal $S_n$ et/ou d'une valeur précédente $M1_{n-1}$ ;
- des moyens de calcul d'un signal $\Delta_n = |M1_n - S_n|$ ;
- des moyens de calcul d'une seconde moyenne $M2_n$ du signal $\Delta_n$ en fonction d'une valeur précédente $M2_{n-1}$ et/ou de la valeur du signal $\Delta_n$ ;
- des moyens de calcul d'une troisième moyenne $M3_n$ du signal $(S_n - k_1.M2_n)$ en fonction d'une valeur précédente $M3_{n-1}$ et/ou de la valeur du signal $(S_n - k_1.M2_n)$ ;
- des moyens de calcul d'une quatrième moyenne $M4_n$ du signal $(S_n + k_2.M2_n)$ en fonction d'une valeur précédente $M4_{n-1}$ et/ou de la valeur du signal $(S_n + k_2.M2_n)$ ;

un mouvement étant considéré comme détecté à partir du résultat obtenu en sortie de moyens de comparaison effectuant au moins une comparaison à partir des signaux $S_n$, $(M3_n - M2_n)$ et $(M4_n + M2_n)$ ;

avec n : nombre entier naturel ;

et $k_1$ et $k_2$ : nombres réels positifs non nuls.

Les moyens de calcul de la première moyenne $M1_n$ peuvent réaliser au moins l'opération suivante :

$$M1_n = M1_{n-1} - \frac{1}{N_1}M1_{n-1} + \frac{1}{N_1}S_n \ ,$$

avec $M1_{-1} = 0$, et

$1/N_1$ : nombre réel positif non nul.

Les moyens de calcul de la première moyenne $M1_n$ peuvent comporter au moins :

- des moyens d'initialisation de la valeur de $M1_0$ à la valeur de $S_0$ ;
- des moyens de comparaison entre la valeur du signal $M1_{n-1}$ et la valeur du signal $S_n$ ;
- des moyens d'incrémentation et de décrémentation de la valeur de $M1_n$ par une constante $c_1$, avec $c_1$ : nombre réel positif non nul.

Les moyens de calcul de la seconde moyenne $M2_n$ peuvent réaliser au moins l'opération suivante :

$$M2_n = M2_{n-1} - \frac{1}{N_2} M2_{n-1} + \frac{1}{N_2} \Delta_n \,,$$

avec $M2_{-1} = 0$, et

$1/N_2$ : nombre réel positif non nul.

Les moyens de calcul de la seconde moyenne $M2_n$ peuvent comporter au moins :

- des moyens d'initialisation de la valeur de $M2_0$ à la valeur de $\Delta_0$ ;
- des moyens de comparaison entre la valeur du signal $M2_{n-1}$ et la valeur du signal $\Delta_n$ ;
- des moyens d'incrémentation et de décrémentation de la valeur de $M2_n$ par une constante $c_2$, avec $c_2$ : nombre réel positif non nul.

Les moyens de calcul de la troisième moyenne $M3_n$ peuvent réaliser au moins l'opération suivante :

$$M3_n = M3_{n-1} - \frac{1}{N_3} M3_{n-1} + \frac{1}{N_3} (S_n - k_1.M2_n) \,,$$

avec $M3_{-1} = 0$, et

$1/N_3$ : nombre réel positif non nul.

Dans ce cas, les moyens de calcul de la troisième moyenne $M3_n$ peuvent comporter en outre des moyens d'ajustement de la valeur de $1/N_3$ en fonction de la valeur $|M3_n - S_n|$ tels que :

- lorsque $M3_n < S_n$, la valeur de $1/N_3$ vérifie la relation : période$(S_n)/\ln(1 - 1/N_3)^{-1} > 1$ s ;
- lorsque $M3_n > S_n$, la valeur de $1/N_3$ vérifie la relation : période$(S_n)/\ln(1 - 1/N_3)^{-1} < 0,5$ s.

Les moyens de calcul de la troisième moyenne $M3_n$ comportant au moins :

- des moyens d'initialisation de la valeur de $M3_0$ à la valeur de $(S_0 - k_1.M2_0)$ ;
- des moyens de comparaison entre la valeur du signal $M3_{n-1}$ et la valeur du signal $(S_n - k_1.M2_n)$ ;
- des moyens d'incrémentation et de décrémentation de la valeur de $M3_n$ par une constante $c_3$, avec $c_3$ : nombre réel positif non nul.

Les moyens de calcul de la quatrième moyenne $M4_n$ peuvent réaliser au moins l'opération suivante :

$$M4_n = M4_{n-1} - \frac{1}{N_4} M4_{n-1} + \frac{1}{N_4}(S_n + k_2.M2_n),$$

avec $M4_{-1} = 0$, et

$1/N_4$ : nombre réel positif non nul.

Dans ce cas, les moyens de calcul de la quatrième moyenne $M4_n$ peuvent comporter en outre des moyens d'ajustement de la valeur de $1/N_4$ en fonction de la valeur $|M4_n - S_n|$ tels que :

- lorsque $M4_n < S_n$, la valeur de $1/N_4$ vérifie la relation : période$(S_n)$/ln$(1 - 1/N_4)^{-1} < 0,5$ s
- lorsque $M4_n > S_n$, la valeur de $1/N_4$ vérifie la relation : période$(S_n)$/ln$(1 - 1/N_4)^{-1} > 1$ s.

Les moyens de calcul de la quatrième moyenne $M4_n$ peuvent comporter au moins :

- des moyens d'initialisation de la valeur de $M4_0$ à la valeur de $(S_0 + k_2.M2_0)$ ;
- des moyens de comparaison entre la valeur du signal $M4_{n-1}$ et la valeur du signal $(S_n + k_2.M2_n)$ ;
- des moyens d'incrémentation et de décrémentation de la valeur de $M4_n$ par une constante $c_4$, avec $c_4$ : nombre réel positif non nul.

Les moyens de comparaison peuvent être des moyens de comparaison entre les signaux $S_n$ et $(M3_n - M2_n)$ et des moyens de comparaison entre les signaux $S_n$ et $(M4_n + M2_n)$, un mouvement pouvant être considéré comme détecté lorsque $S_n > (M4_n + M2_n)$ ou $S_n < (M3_n - M2_n)$.

Le dispositif peut comporter en outre des moyens de calcul d'une cinquième moyenne $M5_n$ du signal $S_n$ en fonction d'une valeur précédente $M5_{n-1}$ et/ou de la valeur du signal $S_n$, les moyens de comparaison pouvant être des moyens de comparaison entre les signaux $M5_n$ et $(M3_n - M2_n)$ et des moyens de comparaison entre les signaux $M5_n$ et $(M4_n + M2_n)$, un mouvement étant considéré comme détecté lorsque $M5_n > (M4_n + M2_n)$ ou $M5_n < (M3_n - M2_n)$.

Dans ce cas, les moyens de calcul de la cinquième moyenne $M5_n$ peuvent réaliser au moins l'opération suivante :

$$M5_n = M5_{n-1} - \frac{1}{N_5} M5_{n-1} + \frac{1}{N_5} S_n,$$

avec $M5_{-1} = 0$, et

$1/N_5$ : nombre réel positif non nul.

Les moyens de comparaison peuvent comporter au moins un amplificateur opérationnel, ou amplificateur de transconductance.

Enfin, la présente invention concerne aussi un dispositif de capture d'images comportant au moins une matrice de pixels et un dispositif de détection de mouvement tel que décrit précédemment.

## BRÈVE DESCRIPTION DES DESSINS

La présente invention sera mieux comprise à la lecture de la description d'exemples de réalisation donnés à titre purement indicatif et nullement limitatif en faisant référence aux dessins annexés sur lesquels :

- la figure 1 représente schématiquement un dispositif de détection de mouvement à algorithme sigma-delta,
- la figure 2 représente schématiquement un dispositif de détection de mouvement à algorithme de seuillage par enveloppe, objet de la présente invention,
- la figure 3 représente des signaux obtenus lors de la mise en oeuvre d'un procédé de détection de mouvement à algorithme de seuillage par enveloppe, objet de la présente invention,
- la figure 4 représente une partie d'un dispositif de capture d'images comportant un exemple de dispositif de détection de mouvements à algorithme de seuillage par enveloppe, objet de la présente invention.

Des parties identiques, similaires ou équivalentes des différentes figures décrites ci-après portent les mêmes références numériques de façon à faciliter le passage d'une figure à l'autre.

Les différentes parties représentées sur les figures ne le sont pas nécessairement selon une échelle uniforme, pour rendre les figures plus lisibles.

Les différentes possibilités (variantes et modes de réalisation) doivent être comprises comme n'étant pas exclusives les unes des autres et peuvent se combiner entre elles.

## EXPOSÉ DÉTAILLÉ DE MODES DE RÉALISATION PARTICULIERS

Un dispositif 100 et un procédé de détection de mouvement à algorithme de seuillage par enveloppe, selon un mode de réalisation particulier vont maintenant être décrits en liaison avec la figure 2.

Une première étape de ce procédé est de réaliser une estimation du fond des images sur lesquelles on souhaite détecter un mouvement, le fond étant formé par les éléments fixes se trouvant sur les images capturées. Pour cela, on calcule tout d'abord, par des moyens 102, une première moyenne $M1_n$ récursive avec un coefficient de pondération $1/N_1$ important d'un signal $S_n$ correspondant au signal délivré par un pixel, ou un groupe de pixels également appelé macropixel, d'une n-ième image acquise. On a :

$$M1_n = M1_{n-1} - \frac{1}{N_1} M1_{n-1} + \frac{1}{N_1} S_n$$

Dans ce calcul de la première moyenne $M1_n$, le choix de la valeur du coefficient de pondération $1/N_1$ est important afin de ne conserver que les éléments fixes se trouvant sur les images acquises. Pour un dispositif de capture d'images fonctionnant à 25 Hz, on choisit par exemple un coefficient de pondération $1/N_1 = 1/(2^7)$. La valeur du coefficient de pondération $1/N_1$ est choisie en fonction de l'amplitude et la fréquence des variations du signal $S_n$.

Ainsi, la valeur $M1_n$ calculée pour un pixel ou un macropixel correspond à l'intensité lumineuse émise par l'élément fixe capturée par ce pixel ou ce macropixel, même si un ou plusieurs éléments mobiles venaient à passer temporairement devant ce pixel ou ce macropixel pendant la durée de la détection de mouvement.

Dans une variante de ce mode de réalisation, la première moyenne $M1_n$ peut ne pas être une moyenne récursive, mais une moyenne sigma-delta, par exemple à faible niveau d'incrémentation et de décrémentation $c_1$ (par exemple égal à 1), permettant également de calculer l'estimation du fond. Un effet similaire peut également être obtenu en choisissant une faible vitesse de rafraichissement. Ce faible niveau d'incrémentation et de décrémentation correspond à une constante de temps importante dans un calcul de moyenne récursive. Pour cela, on réalise tout d'abord l'initialisation $M1_0 = S_0$. Pour les images suivantes, c'est-à-dire pour n > 0, on compare $M1_{n-1}$ et $S_n$. Si $M1_{n-1} < S_n$, on incrémente alors la valeur de $M1_{n-1}$ tel que $M1_n = M1_{n-1} + c_1$. Si $M1_{n-1} > S_n$, on décrémente alors la valeur de $M1_{n-1}$ tel que $M1_n = M1_{n-1} - c_1$.

On réalise ensuite le calcul du signal $\Delta_n = |M1_n - S_n|$ par l'intermédiaire d'un soustracteur 104 et de moyens de calcul de valeur absolue 106.

On réalise ensuite le calcul, par l'intermédiaire de moyens de calcul 108, d'une seconde moyenne $M2_n$ sigma-delta à niveau d'incrémentation et de décrémentation constant $c_2$ (par exemple égal à 1) du signal $\Delta n$.

Pour réaliser le calcul de cette seconde moyenne $M2_n$, on réalise tout d'abord l'initialisation $M2_0 = \Delta_0$. Pour les images suivantes, c'est-à-dire pour n > 0, on compare $M2_{n-1}$ et $\Delta_n$. Si $M2_{n-1} < \Delta_n$, on incrémente alors la valeur de $M2_{n-1}$ tel que $M2_n = M2_{n-1} + c_2$. Si $M2_{n-1} > \Delta_n$, on décrémente alors la valeur de $M2_{n-1}$ tel que $M2_n = M2_{n-1} - c_2$.

Il est également possible que cette seconde moyenne $M2_n$ ne soit pas une moyenne de type sigma-delta, mais une moyenne de type récursive. Dans ce cas, les moyens de calcul 108 réalisent le calcul de la seconde moyenne $M2_n$ récursive avec une constante de temps $1/N_2$ importante, du signal $\Delta_n$. Cette seconde moyenne $M2_n$ récursive est obtenue par le calcul suivant :

$$M2_n = M2_{n-1} - \frac{1}{N_2} M2_{n-1} + \frac{1}{N_2} \Delta_n$$

Le coefficient de pondération $1/N_2$ est choisi en fonction de l'amplitude et la fréquence des variations du signal d'enveloppe $\Delta_n$. On a par exemple $N_2 = 2^6$.

On calcule ensuite le signal $S_n - k_1.M2_n$ par l'intermédiaire d'un soustracteur 110 et d'un multiplicateur 111. La valeur de la constante $k_1$ est ici égale à 1.

Le dispositif 100 comporte également des moyens de calcul 114 d'une troisième moyenne $M3_n$ récursive. Cette troisième moyenne $M3_n$ récursive est obtenue par le calcul suivant :

$$M3_n = M3_{n-1} - \frac{1}{N_3}M3_{n-1} + \frac{1}{N_3}(S_n - k_1.M2_n)$$

Le coefficient de pondération $1/N_3$ est choisi en fonction de l'amplitude et la fréquence des variations du signal $(S_n - k_1.M2_n)$. On a par exemple $N_3 = 2^6$.

Cette troisième moyenne $M3_n$ peut également être obtenue par un calcul de moyenne delta-sigma du signal $(S_n - k_1.M2_n)$ avec une constante d'incrémentation $c_3$.

On calcule alors le signal $S_n + k_2.M2_n$ par l'intermédiaire d'un additionneur 112 et d'un multiplicateur 113. La valeur de la constante $k_2$ est ici égale à 1.

Puis, des moyens de calcul 116 permettent le calcul d'une quatrième moyenne $M4_n$ récursive. Cette quatrième moyenne $M4_n$ récursive est obtenue par le calcul suivant :

$$M4_n = M4_{n-1} - \frac{1}{N_4}M4_{n-1} + \frac{1}{N_4}(S_n + k_2.M2_n)$$

La constante de temps $1/N_4$ est choisie en fonction de l'amplitude et la fréquence des variations du signal $(S_n + k_2.M2_n)$. On a par exemple $N_4 = 2^6$.

Il est possible que les valeurs de $1/N_3$ et/ou $1/N_4$ soient constantes pendant toute la durée du procédé de détection de mouvement. Il est également possible que l'une ou ces deux valeurs soient variables au cours du procédé de détection de mouvement en fonction de la valeur de $|M3_n - S_n|$ pour $M3_n$ et $|M4_n - S_n|$ pour $M4_n$. Ainsi, on peut par exemple choisir une constante de temps $1/N_3$ plus rapide lorsque $M3_n > S_n$, ou encore choisir une constante de temps $1/N_4$ plus lente lorsque $Sn > M4_n$.

Dans une variante, la troisième moyenne et/ou la quatrième moyenne peuvent également être de type sigma-delta, avec des constantes d'incrémentation et de décrémentation $c_3$ et $c_4$.

De préférence, on choisira une troisième moyenne $M3_n$ et une quatrième moyenne $M4_n$ de type récursif.

Enfin, pour déterminer la présence ou non de mouvements sur l'image n capturée, le dispositif 100 comporte deux comparateurs 122 et 124 réalisant une comparaison entre les signaux $(M3_n - M2_n)$, obtenu par un soustracteur 118, et $S_n$, et entre les signaux $(M4_n + M2_n)$, obtenu par un additionneur 120, et $S_n$, un mouvement étant considéré comme détecté lorsque $S_n > (M4_n + M2_n)$ ou $S_n < (M3_n - M2_n)$.

Dans une variante, il est également possible que la détermination de la présence ou non de mouvements sur l'image n capturée soit réalisée en comparant les signaux $(M4_n + M2_n)$ et $(M3_n - M2_n)$ non pas avec $S_n$ mais avec une cinquième moyenne $M5_n$ de type récursive de ce signal $S_n$. Cette cinquième moyenne $M5_n$ récursive est obtenue par le calcul suivant :

$$M5_n = M5_{n-1} - \frac{1}{N_5}M5_{n-1} + \frac{1}{N_5}S_n$$

Le coefficient de pondération $1/N_5$ utilisé pour ce calcul est de préférence choisi rapide (par exemple $N_5 = 2^6$). Le coefficient de pondération $1/N_5$ est choisi en fonction de l'amplitude et la fréquence des variations du signal $S_n$. Dans ce cas, le dispositif 100 comporte des moyens de calcul de cette cinquième moyenne, non représentés, dont la sortie est envoyée en entrée des comparateurs 122 et 124 à la place du signal $S_n$.

Ce procédé est basé sur la génération de d'une enveloppe dont les valeurs basse et haute constitue des valeurs seuils permettant de déterminer la présence ou non de mouvement. Le seuillage des variations détectées est donc adaptatif.

De manière générale, les valeurs d'incrémentation et de décrémentation $c_1$ et/ou $c_2$ et/ou les constantes de temps $1/N_1$, $1/N_2$, $1/N_3$, $1/N_4$ et $1/N_5$ utilisées dans les calcul de moyennes sont adaptées en fonction de la résolution des pixels des images capturées, c'est-à-dire du nombre de niveau de gris sur lequel est codé le signal traité, ainsi que de la fréquence de fonctionnement du dispositif de détection de mouvement 100.

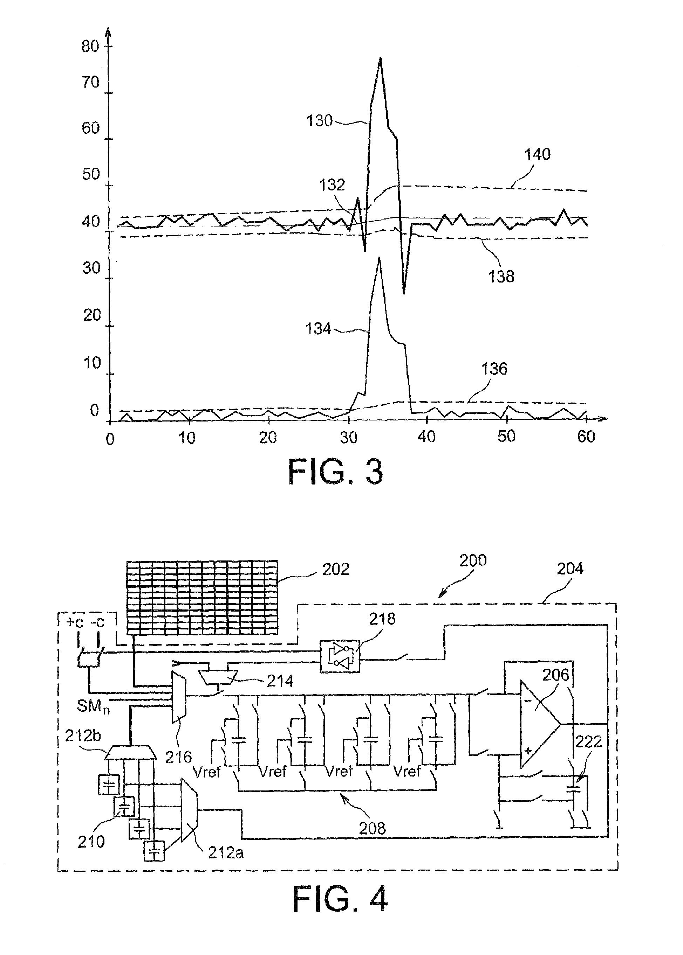

La figure 3 représente un exemple d'un signal $S_n$ issu de plusieurs images capturées par une matrice de pixels ainsi que les différents signaux calculés au cours d'un procédé de détection de mouvement à algorithme de seuillage par enveloppe décrit précédemment.

Sur cette figure 3, l'axe des abscisses représente l'évolution des signaux, gradué en nombre d'images capturées, et l'axe des ordonnées représente la valeur de ces signaux gradué en niveaux de gris. la courbe 130 représente le signal $S_n$ obtenu en sortie d'un pixel ou d'un macropixel. C'est ce signal qui est envoyé en entrée du dispositif 100. La courbe 132 représente la première moyenne $M1_n$, ici récursive, obtenue en sortie des moyens de calcul 102. Cette première moyenne $M1_n$ représente le fond de l'image capturée, c'est-à-dire le ou les éléments fixes capturés par le pixel ou le groupe de pixels. Sur la figure 3, on voit que cette première moyenne $M1_n$ varie peu, ce qui correspond effectivement à la valeur des éléments fixes capturés. La courbe 134 représente le signal $\Delta_n$. On voit sur la figure 3 que ce signal $\Delta_n$ suit les variations les plus significatives du signal de sortie $S_n$ selon la courbe 130, réalisant bien une estimation des variations, c'est-à-dire des éléments mobiles se trouvant sur les images capturées. Enfin, les courbes 136, 138 et 140 représentent respectivement les signaux $M2_n$, $M3_n$ et $M4_n$. Les courbes 138 et 140 représentent bien les frontières basse et haute de l'enveloppe de seuillage calculée autour du signal $S_n$. Ainsi, en choisissant correctement la valeur du coefficient de pondération pour le calcul de la seconde moyenne $M2_n$, les mouvements parasites hautes fréquences correspondant aux faibles variations enregistrées par le dispositif de capture d'images ne sont pas considérés comme des mouvements détectés.

Un exemple de dispositif de capture d'image 200, ou imageur optique, permettant de mettre en oeuvre un procédé de détection de mouvement à algorithme de seuillage par enveloppe décrit précédemment est représenté sur la figure 4.

Le dispositif de capture d'images 200 comporte une matrice de pixels 202 et un dispositif de détection de mouvements 204. Chaque pixel de la matrice <u>202</u> est ici formé par une photodiode et des transistors d'adressage et de lecture. Le procédé de détection de mouvement à algorithme de seuillage par enveloppe décrit précédemment peut s'appliquer au signal $S_n$ délivré par un pixel, en reliant un dispositif de détection de mouvements similaire au dispositif 204 à chaque colonne de pixels de la matrice 202. Il est également possible que le procédé de détection de mouvement s'applique à un signal $S_n$ correspondant aux signaux délivrés par plusieurs pixels, par exemple la moyenne de ces signaux. Ainsi, en considérant des macropixels, il est possible de faire travailler le dispositif de capture d'images 200 avec des zones sous-résolues, et de ne détailler ces zones en mettant en oeuvre un procédé de détection de mouvements à algorithme de seuillage par enveloppe pour chaque pixel d'un macropixel que lorsqu'un mouvement a été détecté au niveau de ce macropixel. Il est alors possible de réduire le nombre de dispositif de détection de mouvement 204 utilisés dans le dispositif de capture d'images 200 en ne faisant appel qu'à un seul dispositif de détection de mouvements 204 par colonne de macropixels. Un macropixel peut par exemple être un carré de $12 \times 12$ pixels, ou encore d'une toute autre valeur, par exemple $4 \times 4$ pixels comme sur la figure 4. Les valeurs de chaque macropixel de la matrice 202 sont lues ligne par ligne.

Le dispositif de détection de mouvements 204 représenté sur la figure 4 comporte un comparateur 206, par exemple un amplificateur opérationnel (ou amplificateur de transconductance), une pluralité de capacités commutées 208, des registres mémoires analogiques 210 (quatre registres mémoires 210 sont représentés sur la figure 4 mais le dispositif de détection de mouvement 204 peut comporter un nombre différent de registres mémoires adapté au nombre de valeurs à stocker pendant la mise en oeuvre du procédé de détection de mouvement), un démultiplexeur d'adressage 212a, un multiplexeur d'adressage 212b, un multiplexeur 214 de commande d'écriture dans les capacités commutées 208, un multiplexeur 216 apportant les valeurs à écrire dans les capacités commutées 208, une mémoire SRAM 218 et un condensateur 222.

Le fonctionnement du dispositif de détection de mouvement 204 va maintenant être décrit en liaison avec la mise en oeuvre du procédé de détection de mouvements décrit précédemment.

Dans le cas d'une première moyenne $M1_n$ de type récursive, on délivre en entrée du multiplexeur 216, par l'intermédiaire du multiplexeur d'adressage 212b, la valeur du signal $M_{n-1}$ stockée dans un des registres mémoire 210. Lorsque n = 0, on a $M_{-1} = 0$. On réalise ensuite le calcul de la première moyenne $M1_n$ récursive. Pour cela, le signal $M_{n-1}$ est envoyé aux bornes d'une première des capacités commutées 208 dont la valeur est égale à $(N_1-1)/N_1$. La valeur du signal $M_{n-1}$ est stockée aux bornes de cette capacité.

On lit ensuite le signal $S_n$ délivré par le premier macropixel de la matrice 202 en entrée du multiplexeur 216. La valeur du signal $S_n$ est stockée aux bornes d'une seconde capacité commutée dont la valeur est égale à $1/N_1$.

En reliant en parallèle les deux précédentes capacités commutées, on obtient bien le signal

$$M1_n = M1_{n-1} - \frac{1}{N_1} M1_{n-1} + \frac{1}{N_1} S_n \text{ aux bornes de ces capacités.}$$

Il est également possible que la moyenne $M1_n$ soit une moyenne sigma-delta. Pour cela, on réalise l'initialisation $M1_0 = S_0$ en stockant la valeur du signal $S_0$ dans un des registres mémoire 210. Pour les images suivantes, on compare

$M1_{n-1}$ et $S_n$ en appliquant l'un des deux signaux sur l'entrée positive du comparateur 206 par l'intermédiaire du condensateur 222 dans lequel est stocké ce signal, et en appliquant l'autre des deux signaux sur l'entrée négative du comparateur 206. Le résultat obtenu en sortie du comparateur 206 permet alors de sélectionner l'une des valeurs $+c_1$ ou $-c_1$ appliquées en entrée du multiplexeur 216 (+c et -c sur la figure 4). Si $M1_{n-1} < S_n$, on incrémente alors la valeur de $M1_{n-1}$ tel que $M1_n = M1_{n-1} + c_1$. Si $M1_{n-1} > S_n$, on décrémente alors la valeur de $M1_{n-1}$ tel que $M1_n = M1_{n-1} - c_1$. Dans cet exemple de réalisation, $c_1 = 1$. L'opération d'addition de $+/-c_1$ à $M1_{n-1}$ est réalisée par l'intermédiaire des capacités 208 en stockant aux bornes de deux de ces capacités les valeurs $+/-c_1$ et $M1_{n-1}$, et en reliant ces capacités en série de manière à réaliser une addition.

Que la moyenne $M1_n$ soit de type récursive ou sigma-delta, sa valeur est stockée dans un des registres mémoire 210. Dans cet exemple de réalisation, le dispositif de détection de mouvement 204 comporte quatre registres mémoire 210 destinés à stocker quatre moyennes $M1_n$, $M2_n$, $M3_n$ et $M4_n$ différentes.

On réalise ensuite le calcul du signal $\Delta_n = |M1_n - S_n|$. Cette opération peut être réalisée par l'intermédiaire des capacités commutées 208.

De manière similaire au calcul de la première moyenne $M1_n$, on réalise le calcul de la seconde moyenne $M2_n$, de type récursive ou sigma-delta. Lorsque $M2_n$ est de type récursive, on utilise alors deux autres des capacités commutées 208 respectivement de valeur $(N_2-1)/N_2$ et $1/N_2$. Lorsque la seconde moyenne $M2_n$ est de type sigma-delta, le calcul de cette seconde moyenne est réalisée de manière similaire au calcul de la première moyenne $M1_n$, en utilisant alors deux valeurs $+c_2$ et $-c_2$ appliquées en entrée du multiplexeur 216 au lieu des valeurs $+c_1$ et $-c_1$.

On réalise ensuite le calcul du $(S_n - k_1.M2_n)$ par l'intermédiaire des capacités commutées 208, puis celui de la troisième moyenne $M3_n$ de ce signal. Enfin, on calcule le signal $(S_n + k_2.M2_n)$ et celui de la quatrième moyenne $M4_n$ de ce signal.

On réalise alors une comparaison par l'intermédiaire de l'amplificateur 206 entre le signal $S_n$ et le signal $(M3_n - M2_n)$. La valeur obtenue en sortie de l'amplificateur 206 est représentative d'une détection ou non d'un mouvement au niveau du macropixel considéré. Si $S_n < (M3_n - M2_n)$, alors on considère qu'un mouvement a été détecté au niveau du macropixel considéré.

Ensuite, on réalise une comparaison par l'intermédiaire de l'amplificateur 206 entre le signal $S_n$ et le signal $(M4_n + M2_n)$. La valeur obtenue en sortie de l'amplificateur 206 est représentative d'une détection ou non d'un mouvement au niveau du macropixel considéré. Si $S_n > (M4_n + M2_n)$, alors on considère qu'un mouvement a été détecté au niveau du macropixel considéré.

L'opération est ensuite répétée pour les macropixels suivants, ligne après ligne.

Dans une variante, on peut remplacer la comparaison entre le signal $S_n$ et le signal $(M3_n - M2_n)$ par une comparaison d'une cinquième moyenne $M5_n$ de type récursive de ce signal $S_n$ avec le signal $(M3_n - M2_n)$. La valeur obtenue en sortie de l'amplificateur 206 est représentative d'une détection ou non d'un mouvement au niveau du macropixel considéré. Si $M5_n < (M3_n - M2_n)$, alors on considère qu'un mouvement a été détecté au niveau du macropixel considéré. Cette cinquième moyenne $M5_n$ récursive est obtenue par le calcul suivant :

$$M5_n = M5_{n-1} - \frac{1}{N_5}M5_{n-1} + \frac{1}{N_5}S_n$$

Ce calcul peut être réalisé par l'intermédiaire de capacités commutées de valeur $(N_5-1)/N_5$ et $1/N_5$.

De la même manière, la comparaison entre $S_n$ et le signal $(M4_n + M2_n)$ peut être remplacée par une comparaison entre $M5_n$ et $(M4_n + M2_n)$. Si $M5_n > (M4_n + M2_n)$, alors on considère qu'un mouvement a été détecté au niveau du macropixel considéré.

Pour la moyenne $M2_n$, il est possible d'imposer une valeur seuil minimum non nulle en dessous de laquelle il n'est pas permis que la valeur de cette moyenne descende. Cette valeur seuil minimum $S_{M2n}$ peut être appliquée en entrée du multiplexeur 216. Lorsque la valeur de cette moyenne est inférieure à la valeur de ce seuil, sa valeur est alors remplacée par la valeur seuil. Par exemple, dans ce mode de réalisation, la valeur de $S_{M2n}$ peut être égale à environ $1/50 \times$ la dynamique du signal $S_n$.

Lorsqu'un mouvement est détecté au niveau d'un macropixel, il est possible, pour une image n dont la détection de mouvement a été réalisée sur des macropixels, de stocker les valeurs des macropixels dans la mémoire 218, puis, au niveau du ou des macropixels ayant enregistré des mouvements, de mettre en oeuvre le procédé de détection de mouvements décrit précédemment pour chacun des pixels du macropixel. Ainsi, il est possible de définir précisément la localisation des mouvements détectés sans traiter tous les pixels des images capturées.

On voit donc que le procédé peut être mis en oeuvre à partir de peu de ressources matérielles de calcul (un amplificateur opérationnel, plusieurs capacités commutées avec une fréquence d'horloge pour les instructions de quelques dizaines de kHz et quelques multiplexeurs / démultiplexeurs) et de mémoire (quelques registres analogiques par pixel et une mémoire SRAM par exemple).

Le dispositif représenté sur la figure 4 permet une mise en oeuvre analogique du procédé de détection de mouvement décrit précédemment. Toutefois, il est également possible de réaliser une mise en oeuvre numérique du procédé de détection de mouvements en reliant la matrice de pixels 202 à des moyens de traitement numérique du signal, par exemple un circuit de type DSP, FPGA ou un microprocesseur, dans lequel le procédé de détection de mouvements est programmé.

Les signaux obtenus en sortie des dispositifs de détection de mouvement peuvent être utilisés pour afficher une image sur laquelle le fond capturé forme un fond noir sur lequel les éléments mobiles détectés sont représentés en blanc, comme par exemple représenté sur l'image de droite de la figure 4.

**Revendications**

1. Procédé de détection de mouvement comportant au moins les étapes suivantes :

   - calcul d'une première moyenne $M1_n$ d'un signal $S_n$ destiné à être délivré par au moins un pixel d'une matrice de pixels (202) et correspondant à une n-ième image capturée, en fonction de la valeur du signal $S_n$ et/ou d'une valeur précédente $M1_{n-1}$ ;
   - calcul d'un signal $\Delta_n = |M1_n - S_n|$ ;
   - calcul d'une seconde moyenne $M2_n$ du signal $\Delta_n$ en fonction d'une valeur précédente $M2_{n-1}$ et/ou de la valeur du signal $\Delta_n$ ;
   - calcul d'une troisième moyenne $M3_n$ du signal $(S_n - k_1.M2_n)$ en fonction d'une valeur précédente $M3_{n-1}$ et/ou de la valeur du signal $(S_n - k_1.M2_n)$ ;
   - calcul d'une quatrième moyenne $M4_n$ du signal $(S_n + k_2.M2_n)$ en fonction d'une valeur précédente $M4_{n-1}$ et/ou de la valeur du signal $(S_n + k_2.M2_n)$ ;

   un mouvement étant considéré comme détecté à partir du résultat d'au moins une comparaison réalisée à partir des signaux $S_n$, $(M3_n - M2_n)$ et $(M4_n + M2_n)$ ;
   avec n : nombre entier naturel ;
   et $k_1$ et $k_2$ : nombres réels positifs non nuls.

2. Procédé selon la revendication 1, la première moyenne $M1_n$ étant obtenue à partir de l'équation suivante :

$$M1_n = M1_{n-1} - \frac{1}{N_1} M1_{n-1} + \frac{1}{N_1} S_n \text{ ,}$$

   avec $M1_{-1} = 0$, et

   $1/N_1$ : nombre réel positif non nul.

3. Procédé selon la revendication 1, la première moyenne $M1_n$ étant obtenue au moins par les étapes de calcul suivantes :

   - $M1_0 = S_0$ ;
   et pour $n > 0$ :
   - $M1_n = M1_{n-1} + c_1$ lorsque $M1_{n-1} < S_n$ ;
   - $M1_n = M1_{n-1} - c_1$ lorsque $M1_{n-1} > S_n$ ;
   avec $c_1$ : nombre réel positif non nul.

4. Procédé selon l'une des revendications précédentes, la seconde moyenne $M2_n$ étant obtenue à partir de l'équation suivante :

$$M2_n = M2_{n-1} - \frac{1}{N_2} M2_{n-1} + \frac{1}{N_2} \Delta_n ,$$

avec $M2_{-1} = 0$, et

$1/N_2$ : nombre réel positif non nul.

**5.** Procédé selon l'une des revendications 1 à 3, la seconde moyenne $M2_n$ étant obtenue au moins par les étapes de calcul suivantes :

- $M2_0 = \Delta_0$ ;
et pour $n > 0$ :
- $M2_n = M2_{n-1} + c_2$ lorsque $M2_{n-1} < \Delta_n$ ;
- $M2_n = M2_{n-1} - c_2$ lorsque $M2_{n-1} > \Delta_n$;
avec $c_2$ : nombre réel positif non nul.

**6.** Procédé selon l'une des revendications précédentes, la troisième moyenne $M3_n$ étant obtenue à partir de l'équation suivante :

$$M3_n = M3_{n-1} - \frac{1}{N_3} M3_{n-1} + \frac{1}{N_3} (S_n - k_1.M2_n) ,$$

avec $M3_{-1} = 0$, et

$1/N_3$ : nombre réel positif non nul.

**7.** Procédé selon la revendication 6, la valeur de $1/N_3$ étant ajustée en fonction de la valeur $|M3_n - S_n|$ :

- lorsque $M3_n < S_n$, la valeur de $1/N_3$ vérifie la relation : période$(S_n)/\ln(1 - 1/N_3)^{-1} > 1$ s ;
- lorsque $M3_n > S_n$, la valeur de $1/N_3$ vérifie la relation : période$(S_n)/\ln(1 - 1/N_3)^{-1} < 0,5$ s.

**8.** Procédé selon l'une des revendications 1 à 5, la troisième moyenne $M3_n$ étant obtenue au moins par les étapes de calcul suivantes :

- $M3_0 = (S_0 - k_1.M2_0)$ ;
et pour $n > 0$ :
- $M3_n = M3_{n-1} + c_3$ lorsque $M3_{n-1} < (S_n - k_1.M2_n)$ ;
- $M3_n = M3_{n-1} - c_3$ lorsque $M3_{n-1} > (S_n - k_1.M2_n)$ ;
avec $c_3$ : nombre réel positif non nul.

**9.** Procédé selon l'une des revendications précédentes, la quatrième moyenne $M4_n$ étant obtenue à partir de l'équation suivante :

$$M4_n = M4_{n-1} - \frac{1}{N_4} M4_{n-1} + \frac{1}{N_4} (S_n + k_2.M2_n) ,$$

avec $M4_{-1} = 0$, et

$1/N_4$ : nombre réel positif non nul.

**10.** Procédé selon la revendication 9, la valeur de $1/N_4$ étant ajustée en fonction de la valeur $|M4_n - S_n|$ :

- lorsque $M4_n < S_n$, la valeur de $1/N_4$ vérifie la relation : période$(S_n)/\ln(1 - 1/N_4)^{-1} < 0,5$ s
- lorsque $M4_n > S_n$, la valeur de $1/N_4$ vérifie la relation : période$(S_n)/\ln(1 - 1/N_4)^{-1} > 1$ s.

**11.** Procédé selon l'une des revendications 1 à 8, la quatrième moyenne $M4_n$ étant obtenue au moins par les étapes de calcul suivantes :

- $M4_0 = (S_0 + k_2.M2_0)$ ;
et pour $n > 0$ :
- $M4_n = M4_{n-1} + c_4$ lorsque $M4_{n-1} < (S_n + k_2.M2_n)$ ;
- $M4_n = M4_{n-1} - c_4$ lorsque $M4_{n-1} > (S_n + k_2.M2_n)$ ;
avec $c_4$ : nombre réel positif non nul.

**12.** Procédé selon l'une des revendications précédentes, la valeur de la seconde moyenne $M2_n$ étant supérieure à une seconde valeur seuil minimum non nulle $S_{M2n}$.

**13.** Procédé selon la revendication 12, la valeur de $S_{M2n}$ étant comprise entre environ $1/250 \times$ la dynamique du signal $S_n$ et $1/25 \times$ la dynamique du signal $S_n$.

**14.** Procédé selon l'une des revendications précédente, ladite comparaison étant réalisée entre les signaux $S_n$ et $(M3_n - M2_n)$ et entre les signaux $S_n$ et $(M4_n + M2_n)$, un mouvement étant considéré comme détecté lorsque $S_n > (M4_n + M2_n)$ ou $S_n < (M3_n - M2_n)$.

**15.** Procédé selon l'une des revendications 1 à 13, comportant en outre, entre l'étape de calcul de la quatrième moyenne $M4_n$ du signal $(S_n + M2_n)$ et l'étape de comparaison, une étape de calcul d'une cinquième moyenne $M5_n$ du signal $S_n$ en fonction d'une valeur précédente $M5_{n-1}$ et/ou de la valeur du signal $S_n$, ladite comparaison étant réalisée entre les signaux $M5_n$ et $(M3_n - M2_n)$ et entre les signaux $M5_n$ et $(M4_n + M2_n)$, un mouvement étant considéré comme détecté lorsque $M5_n > (M4_n + M2_n)$ ou $M5_n < (M3_n - M2_n)$.

**16.** Procédé selon la revendication 15, la cinquième moyenne $M5_n$ étant obtenue à partir de l'équation suivante :

$$M5_n = M5_{n-1} - \frac{1}{N_5} M5_{n-1} + \frac{1}{N_5} S_n \, ,$$

avec $M5_{-1} = 0$, et

$1/N_5$ : nombre réel positif non nul.

**17.** Dispositif de détection de mouvement (100, 204) comportant au moins :

- des moyens de calcul (102) d'une première moyenne $M1_n$ d'un signal $S_n$ destiné à être délivré par au moins un pixel d'une matrice de pixels (202) et correspondant à une n-ième image capturée, en fonction de la valeur du signal $S_n$ et/ou d'une valeur précédente $M1_{n-1}$ ;
- des moyens de calcul (104, 106) d'un signal $\Delta_n = |M1_n - S_n|$ ;
- des moyens de calcul (108) d'une seconde moyenne $M2_n$ du signal $\Delta_n$ en fonction d'une valeur précédente $M2_{n-1}$ et/ou de la valeur du signal $\Delta_n$ ;
- des moyens de calcul (114) d'une troisième moyenne $M3_n$ du signal $(S_n - k_1.M2_n)$ en fonction d'une valeur précédente $M3_{n-1}$ et/ou de la valeur du signal $(S_n - k_1.M2_n)$ ;
- des moyens de calcul (116) d'une quatrième moyenne $M4_n$ du signal $(S_n + k_2.M2_n)$ en fonction d'une valeur précédente $M4_{n-1}$ et/ou de la valeur du signal $(S_n + k_2.M2_n)$ ;

un mouvement étant considéré comme détecté à partir du résultat obtenu en sortie de moyens de comparaison (122, 124) effectuant au moins une comparaison à partir des signaux $S_n$, $(M3_n - M2_n)$ et $(M4_n + M2_n)$ ;
avec $n$ : nombre entier naturel ;
et $k_1$ et $k_2$ : nombres réels positifs non nuls.

**18.** Dispositif (100, 204) selon la revendication 17, les moyens de calcul (102) de la première moyenne $M1_n$ réalisant au moins l'opération suivante :

$$M1_n = M1_{n-1} - \frac{1}{N_1} M1_{n-1} + \frac{1}{N_1} S_n \, ,$$

avec $M1_{-1} = 0$, et

$1/N_1$ : nombre réel positif non nul.

**19.** Dispositif (100, 204) selon la revendication 17, les moyens de calcul (102) de la première moyenne $M1_n$ comportant au moins :

- des moyens d'initialisation de la valeur de $M1_0$ à la valeur de $S_0$ ;
- des moyens de comparaison entre la valeur du signal $M1_{n-1}$ et la valeur du signal $S_n$ ;
- des moyens d'incrémentation et de décrémentation de la valeur de $M1_n$ par une constante $c_1$, avec $c_1$ : nombre réel positif non nul.

**20.** Dispositif (100, 204) selon l'une des revendications 17 à 19, les moyens de calcul (108) de la seconde moyenne $M2_n$ réalisant au moins l'opération suivante :

$$M2_n = M2_{n-1} - \frac{1}{N_2} M2_{n-1} + \frac{1}{N_2} \Delta_n \, ,$$

avec $M2_{-1} = 0$, et

$1/N_2$ : nombre réel positif non nul.

**21.** Dispositif (100, 204) selon l'une des revendications 17 à 19, les moyens de calcul (108) de la seconde moyenne $M2_n$ comportant au moins :

- des moyens d'initialisation de la valeur de $M2_0$ à la valeur de $\Delta_0$ ;
- des moyens de comparaison entre la valeur du signal $M2_{n-1}$ et la valeur du signal $\Delta_n$ ;
- des moyens d'incrémentation et de décrémentation de la valeur de $M2_n$ par une constante $c_2$, avec $c_2$ : nombre réel positif non nul.

**22.** Dispositif (100, 204) selon l'une des revendications 17 à 21, les moyens de calcul (114) de la troisième moyenne $M3_n$ réalisant au moins l'opération suivante :

$$M3_n = M3_{n-1} - \frac{1}{N_3} M3_{n-1} + \frac{1}{N_3} (S_n - k_1.M2_n) \, ,$$

avec $M3_{-1} = 0$, et

$1/N_3$ : nombre réel positif.

**23.** Dispositif (100, 204) selon la revendication 22, les moyens de calcul (114) de la troisième moyenne $M3_n$ comportant en outre des moyens d'ajustement de la valeur de $1/N_3$ en fonction de la valeur $|M3_n - S_n|$ tels que:

- lorsque $M3_n < S_n$, la valeur de $1/N_3$ vérifie la relation : $\text{période}(S_n)/\ln(1 - 1/N_3)^{-1} > 1$ s ;
- lorsque $M3_n > S_n$, la valeur de $1/N_3$ vérifie la relation : $\text{période}(S_n)/\ln(1 - 1/N_3)^{-1} < 0{,}5$ s.

**24.** Dispositif (100, 204) selon l'une des revendications 17 à 21, les moyens de calcul (114) de la troisième moyenne $M3_n$ comportant au moins :

- des moyens d'initialisation de la valeur de $M3_0$ à la valeur de $(S_0 - k_1.M2_0)$ ;
- des moyens de comparaison entre la valeur du signal $M3_{n-1}$ et la valeur du signal $(S_n - k_1.M2_n)$ ;
- des moyens d'incrémentation et de décrémentation de la valeur de $M3_n$ par une constante $c_3$, avec $c_3$ : nombre réel positif non nul.

**25.** Dispositif (100, 204) selon l'une des revendications 17 à 24, les moyens de calcul (116) de la quatrième moyenne $M4_n$ réalisant au moins l'opération suivante :

$$M4_n = M4_{n-1} - \frac{1}{N_4} M4_{n-1} + \frac{1}{N_4}(S_n + k_2.M2_n) \, ,$$

avec $M4_{-1} = 0$, et

$1/N_4$ : nombre réel positif non nul.

**26.** Dispositif (100, 204) selon la revendication 25, les moyens de calcul (116) de la quatrième moyenne $M4_n$ comportant en outre des moyens d'ajustement de la valeur de $1/N_4$ en fonction de la valeur $|M4_n - S_n|$ tels que :

- lorsque $M4_n < S_n$, la valeur de $1/N_4$ vérifie la relation : période$(S_n)/\ln(1 - 1/N_4)^{-1} < 0,5$ s
- lorsque $M4_n > S_n$, la valeur de $1/N_4$ vérifie la relation : période$(S_n)/\ln(1 - 1/N_4)^{-1} > 1$ s.

**27.** Dispositif (100, 204) selon l'une des revendications 17 à 24, les moyens de calcul (116) de la quatrième moyenne $M4_n$ comportant au moins :

- des moyens d'initialisation de la valeur de $M4_0$ à la valeur de $(S_0 + k_2.M2_0)$ ;
- des moyens de comparaison entre la valeur du signal $M4_{n-1}$ et la valeur du signal $(S_n + k_2.M2_n)$ ;
- des moyens d'incrémentation et de décrémentation de la valeur de $M4_n$ par une constante $c_4$, avec $c_4$ : nombre réel positif non nul.

**28.** Dispositif (100, 204) selon l'une des revendications 17 à 27, les moyens de comparaison étant des moyens de comparaison (122) entre les signaux $S_n$ et $(M3_n - M2_n)$ et des moyens de comparaison (124) entre les signaux $S_n$ et $(M4_n + M2_n)$, un mouvement étant considéré comme détecté lorsque $S_n > (M4_n + M2_n)$ ou $S_n < (M3_n - M2_n)$.

**29.** Dispositif (100, 204) selon l'une des revendications 17 à 27, comportant en outre des moyens de calcul d'une cinquième moyenne $M5_n$ du signal $S_n$ en fonction d'une valeur précédente $M5_{n-1}$ et/ou de la valeur du signal $S_n$, les moyens de comparaison étant des moyens de comparaison (122) entre les signaux $M5_n$ et $(M3_n - M2_n)$ et des moyens de comparaison (124) entre les signaux $M5_n$ et $(M4_n + M2_n)$, un mouvement étant considéré comme détecté lorsque $M5_n > (M4_n + M2_n)$ ou $M5_n < (M3_n - M2_n)$.

**30.** Dispositif (100, 204) selon la revendication 29, les moyens de calcul de la cinquième moyenne $M5_n$ réalisant au moins l'opération suivante :

$$M5_n = M5_{n-1} - \frac{1}{N_5} M5_{n-1} + \frac{1}{N_5} S_n \, ,$$

avec $M5_{-1} = 0$, et

$1/N_5$ : nombre réel positif non nul.

**31.** Dispositif de capture d'images (200) comportant au moins une matrice de pixels (202) et un dispositif de détection de mouvement (100, 204) selon l'une des revendications 17 à 30.

FIG. 1

FIG. 2

EP 2 023 291 A2

FIG. 3

FIG. 4